# EUROPEAN PATENT APPLICATION

(11) **EP 4 539 394 A1**
(43) Date of publication of application: **16.04.2025**
(21) Application number: 23825940.2
(22) Date of filing: 25.04.2023
(51) Int. Cl.: H04L 9/40

(54) **SECURE-CHANNEL ESTABLISHMENT METHOD AND SYSTEM, AND STORAGE MEDIUM**

(30) Priority: 23.06.2022 CN 202210719482
(71) Applicant: ZTE Corporation, Shenzhen, Guangdong 518057 (CN)
(72) Inventor: YING, Yunlong, Shenzhen, Guangdong 518057 (CN)
(74) Representative: Savi, Massimiliano
(86) International application number: PCT/CN2023/090632
(87) International publication number: WO 2023/246287

(57) **Abstract**

Disclosed in the embodiments of the present application are a secure-channel establishment method and system, and a storage medium. The method comprises: acquiring request information for creating a container cluster (S1000); a container cluster manager verifying the request information and generating security certification information for the container cluster (S2000); creating a temporarily encrypted cloud disk, and writing, into the temporarily encrypted cloud disk, the security certification information and a security certificate of an orchestrator (S3000); binding the temporarily encrypted cloud disk to a control node of the container cluster, and starting the container cluster (S4000); establishing a secure channel between the container cluster manager and the container cluster according to the security certification information and the security certificate (S5000); and the orchestrator accommodating and managing the container cluster, and establishing a secure channel between the orchestrator and the container cluster (S6000).

## Description

### CROSS-REFERENCE TO RELATED APPLICATION

This application is based on and claims the priority of Chinese patent application No. 202210719482.0 filed on June 23, 2022, the disclosure of which is incorporated herein by reference in its entirety.

### TECHNICAL FIELD

The present disclosure relates to the technical field of network security, and in particular to a method for establishing a secure channel and system and a storage medium.

### BACKGROUND

With the prevalence of microservices, the use of an application container engine (Docker) as a deployment environment for microservice applications is becoming increasingly popular. Along with the ever increasing number of containers, it is necessary to use a container cluster manager (CCM) to manage the lifecycle of container clusters (Container Information Model, CIM). The orchestrator and the container cluster manager communicate with each other via an interface to accomplish the management of container clusters in a cooperative manner. The establishment of secure channels between the modules to ensure the security of data transmission has become an issue for container cluster management. Especially in the case of increasingly complex container cluster systems, the security of communications between the orchestrator, the container cluster manager, and the container cluster management system has become more and more complicated.

Since the container cluster manager dynamically creates container clusters based on service requirements, i.e., the container cluster manager may manage a plurality of container clusters, it is not possible to establish secure channels between the container cluster manager and the container clusters, and the orchestrator and the container clusters by means of manually importing certificates. Therefore, at present, when the orchestrator invokes the container cluster manager to create a container cluster, there is no secure channel between the container cluster manager and the container cluster, and thus it is not possible to use an encrypted secure channel, such as Hyper Text Transfer Protocol over SecureSocket Layer (HTTPS), to transfer the certificate and the key that the container cluster needs to use. After the container cluster is created, there is also no secure channel between the orchestrator and the container cluster based on Transport Layer Security (TLS) two-way authentication. Currently, the lack of the above secure channels exposes the communications between the orchestrator, the container cluster manager, and the container cluster to various security risks.

### SUMMARY

Provided are a method for secure channel establishment, an electronic device, and a storage medium in various embodiments of the present disclosure.

In accordance with a first aspect of the present disclosure, an embodiment provides a method for secure channel establishment, which is applied to a network element including an orchestrator, a container cluster manager, and a container cluster. The method includes: acquiring request information for creating the container cluster; verifying the request information and generating security proof information for the container cluster, by the container cluster manager; creating a temporary encrypted cloud disk and writing the security proof information as along with a security certificate of the orchestrator into the temporary encrypted cloud disk; binding the temporary encrypted cloud disk to a control node of the container cluster and starting the container cluster; establishing a first secure channel between the container cluster manager and the container cluster according to the security proof information and the security certificate; and clustering the container cluster by the orchestrator, and establishing a second secure channel between the orchestrator and the container cluster.

In accordance with a second aspect of the present disclosure, an embodiment provides an electronic device, which includes: a memory, a processor, and a computer program stored in the memory and executable by the processor which, when executed by the processor, causes the processor to carry out the method according to the first aspect of the present disclosure.

In accordance with a third aspect of the present disclosure, an embodiment provides a computer-readable storage medium storing a computer program which, when executed by a processor, cause the processor to carry out the method according to the first aspect of the present disclosure.

### BRIEF DESCRIPTION OF DRAWINGS

FIG. 1 is a flowchart of a method for secure channel establishment according to an embodiment of the present disclosure;
FIG. 2 is a flowchart of an implementation of operation S1000 in FIG. 1;
FIG. 3 is a flowchart of an implementation of operation S2000 in FIG. 1;
FIG. 4 is a flowchart of an implementation of operation S3000 in FIG. 1;
FIG. 5 is a flowchart of an implementation of operation S4000 in FIG. 1;
FIG. 6 is a flowchart of an implementation of operation S5000 in FIG. 1;
FIG. 7 is a flowchart of an implementation of operation S5000 in FIG. 6;
FIG. 8 is a flowchart of an implementation of operation S6000 in FIG. 1; and
FIG. 9 is a schematic diagram of an electronic device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It should be understood that, in the description of the embodiments of the present disclosure, if "first" and "second", etc. are referred to, it is only for the purpose of distinguishing technical features, and shall not be understood as indicating or implying relative importance or implying the number of the indicated technical features or implying the sequence of the indicated technical features. "At least one" means one or more, and "a plurality of" means two or more. The term "and/or" describes an association relationship of associated objects, and represents that there may be three kinds of relationships. For example, A and/or B may represent three cases: only A exists, both A and B exist, and only B exists. A and B may be singular or plural. The character "/" generally indicates an "or" relationship between associated objects before and after the character. "At least one of" and a similar expression means any combination of the items, including a single item or any combination of a plurality of items. For example, at least one of a, b, or c may indicate a, b, c, a and b, a and c, b and c, or a, b, and c, where a, b, and c may be singular or plural.

Further, the technical features involved in various embodiments of the present disclosure described below may be combined with each other as long as they do not conflict with each other.

The method for secure channel establishment set forth in embodiments of the present disclosure is to establish secure channels between an orchestrator, a container cluster manager, and a container cluster based on virtualized resource orchestration and container cluster management, by means of: verifying request information and generating security proof information for the container cluster, by the container cluster manager; creating a temporary encrypted cloud disk and writing the security proof information as along with a security certificate of the orchestrator into the temporary encrypted cloud disk; binding the temporary encrypted cloud disk to a control node of the container cluster and starting the container cluster; establishing a first secure channel between the container cluster manager and the container cluster according to the security proof information and the security certificate; and clustering the container cluster by the orchestrator, and establishing a second secure channel between the orchestrator and the container cluster, so as to quickly establish secure channels between the orchestrator, the container cluster manager, and the container cluster. As such, the automation of container cluster management is enhanced, and human intervention is reduced. Thereby the security of communications among the orchestrator, the container cluster manager, and the container cluster is guaranteed.

In order to ensure the security of communications among the orchestrator, the container cluster manager, and the container cluster, the existing method for secure channel establishment includes: configuring security policy rules for a plurality of container clusters, selecting security policy configuration modes for the plurality of container clusters by invoking a network policy controller, and sending a rule input request to the container cluster manager; and performing, after the container cluster manager receives the rule injection request, a rule verification of security policy rules contained in a security policy file that is written by a security requester and sent by the network policy controller. This approach cannot dynamically establish secure channels among the orchestrator, the container cluster manager, and the container cluster, such that the container cluster manager and the container cluster can only interact with each other in accordance with the preset security rules, and thus no flexible adjustments can be made according to the actual operating conditions and human interventions are often required during the operation of the system. Thus, the security of communications among the orchestrator, the container cluster manager, and the container cluster is affected.

In view of this, embodiments of the present disclosure provide a method for secure channel establishment and system and a computer-readable storage medium. of the method includes: acquiring request information for creating a container cluster; verifying the request information and generating security proof information for the container cluster, by a container cluster manager; creating a temporary encrypted cloud disk and writing the security proof information as along with a security certificate of an orchestrator into the temporary encrypted cloud disk; binding the temporary encrypted cloud disk to a control node of the container cluster and starting the container cluster; establishing a first secure channel between the container cluster manager and the container cluster according to the security proof information and the security certificate; and clustering the container cluster by the orchestrator, and establishing a second secure channel between the orchestrator and the container cluster. According to the embodiments of the present disclosure, it is possible to establish secure channels between the container cluster manager and the container cluster and between the orchestrator and the container cluster when the container cluster is created. Thus, the automation of container cluster management is enhanced, and human intervention is reduced. Thereby the security of communications among the orchestrator, the container cluster manager, and the container cluster is guaranteed.

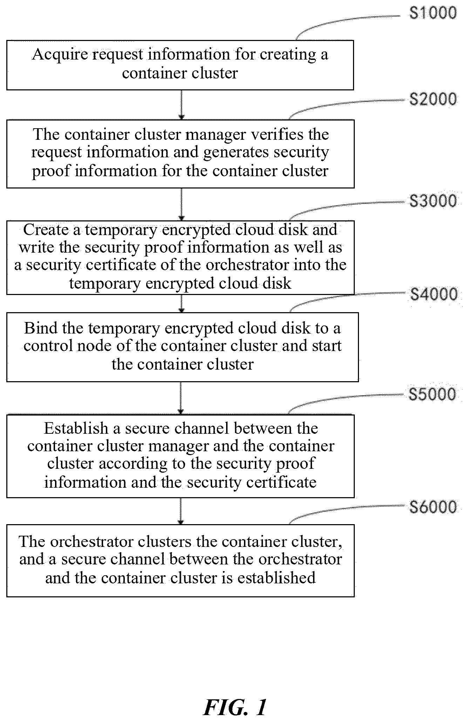

FIG. 1 illustrates a flow of a secure channel establishment method according to an embodiment of the present disclosure. As shown in FIG. 1, the secure channel establishment method of an embodiment of the present disclosure includes the following operations.

At operation S 1000, request information for creating a container cluster is acquired.

It can be understood that an orchestrator imports a self-signed certification authority (CA) certificate of a container cluster manager in a manual manner. The container cluster manager also imports a self-signed CA certificate of the orchestrator in a manual manner. Network elements are capable of identifying the identity of each other over the network via CA certificates. A CA certificate is a file digitally signed by a certificate authority center that contains information about the owner of a public key as well as the public key. Thus, the simplest certificate contains a public key, a name, and a digital signature of the certificate authority center. Commonly used keys include a public key and a private key, i.e., a key pair. When information is encrypted by means of the public key and transmitted over the network to a target network element, the target network element must use the corresponding private key to decrypt it for use, thus establishing a secure channel. CA certificates can effectively improve the security of data transmission in the process of microservice applications, thus providing a higher security guarantee for the user's business.

It can be understood that although a secure channel has been established between the orchestrator and the container cluster manager, the container cluster does not create a secure channel with the orchestrator or the container cluster manager. Since the container cluster manager dynamically creates container clusters according to service needs during the operation of the system. In some implementations, the container cluster manager may manage a plurality of container clusters. However, it is not possible to manually import CA certificates ahead of time to establish a secure channel between the container cluster and the orchestrator or the container cluster manager.

It can be understood that in a deployment environment for microservice applications, as application requirements increase, container clusters need to be created to ensure that system requirements are met. At this point, the type and the number of container clusters to be created need to be determined based on the request information for the creation of container clusters, and then a request for the creation of a container cluster is initiated to the container cluster manager through the orchestrator.

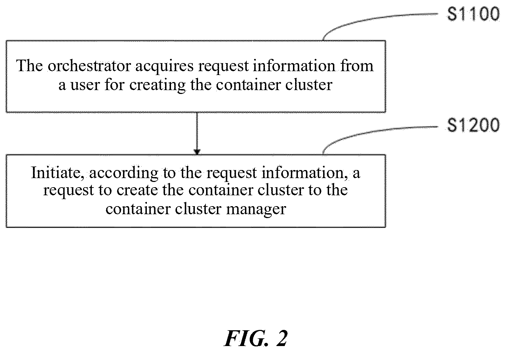

FIG. 2 illustrates a schematic diagram of the implementation of operation S1000. As shown in FIG. 2, the secure channel establishment method of the embodiment of the present disclosure includes the following operations.

At operation S 1100, the orchestrator acquires request information from a user for creating the container cluster.

It can be understood that in the deployment environment for microservice applications, when the performance of an application service cannot be met, the user sends request information for creating a container cluster to the orchestrator to meet the performance requirements of the application service. By acquiring request information from users for creating container clusters through the orchestrator, it is possible to collect the request information issued by the users in a complete manner and quickly transfer the request information to a response unit, thus improving the response speed of the microservice application.

At operation S1200, a request to create the container cluster is initiated to the container cluster manager according to the request information.

It can be understood that the orchestrator, after acquiring request information from the user for creating a container cluster, initiates a request to create the container cluster to the container cluster manager. Since a secure channel has been established between the orchestrator and the container cluster manager, via the secure channel, the orchestrator can aggregate and encrypt the request information for creating container clusters and then send same to the container cluster manager. The information transmission carried out through a secure channel, effectively ensures the confidentiality and security of the data transmission between the orchestrator and the container cluster manager. The container cluster manager performs decryption and verification processing after receiving the encrypted information.

At operation S2000, the container cluster manager verifies the request information and generates security proof information for the container cluster.

It can be understood that the container cluster manager needs to verify the request information sent from the orchestrator before creating the container cluster, so as to ensure that the container cluster to be created conform to the current deployment environment for microservice applications. After the verification is completed, the container cluster manager also needs to assign security proof information consistent with its own CA certificate to the container cluster to be created to ensure that the consistency of the certificates is maintained between the container cluster manager and the container cluster to be created.

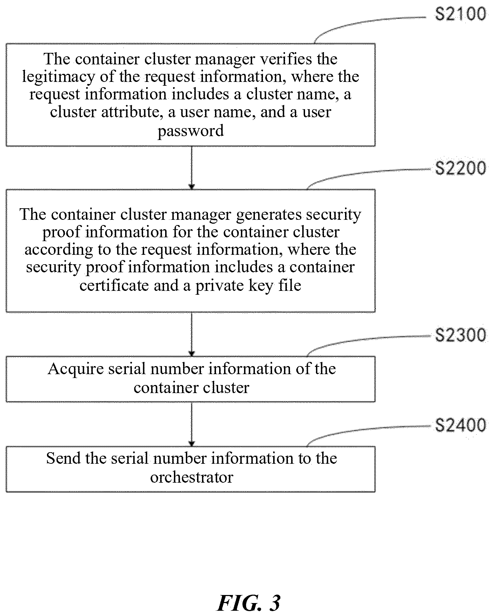

FIG. 3 illustrates a schematic diagram of the implementation of operation S2000. As shown in FIG. 3, operation S2000 includes at least the following operations.

At operation S2100, the container cluster manager verifies the legitimacy of the request information, where the request information includes a cluster name, a cluster attribute, a username, and a user password.

It can be understood that the request information for creating a container cluster includes, but is not limited to, information such as a cluster name, a cluster attribute, a username, and a user password. After receiving the request information, the container cluster manager needs to validate the request information, for example, regarding whether the cluster name requested to be created is duplicated with the existing cluster name, whether the cluster attribute requested to be created meets the requirements of the current microservice application environment, whether the username and the user password are the same as the existing authentication information, and so on. The verification processing in the container cluster manager effectively avoids conflicts between the created container cluster and the existing container clusters, which may otherwise affect the normal operation of the microservice application.

At operation S2200, the container cluster manager generates security proof information for the container cluster according to the request information, where the security proof information includes a container certificate and a private key file.

It can be understood that after the request information for creating a container cluster has been verified by the container cluster manager, the CA certificate of the container cluster manager itself is used to generate the security proof information required by the container cluster. In an implementation, the security proof information includes a container certificate and a private key file. Thus, when information is encrypted using the private key file and transmitted over the network between the container cluster and the container cluster manager, the end that receives the information uses the corresponding private key in order to decrypt it for use, based on which the a secure channel between the container cluster and the container cluster manager is established. It can be understood that generating, based on the CA certificate of the container cluster manager itself, the security proof information required by the container cluster belongs to the prior art and will not be further discussed here.

At operation S2300, serial number information of the container cluster is acquired.

It can be understood that after completing the verification of the request information and the generation of the security proof information, in order to facilitate the management of the container cluster by the container cluster manager, the serial number information of the container cluster needs to be acquired. It can be understood that the serial number information of a container cluster is a unique identifier in the microservice application environment. In order to adapt to different scenarios, needs, and performance requirements, the serial number information of container clusters needs to be collected and recorded so as to facilitate the sorting, traversing, and categorization and other processing of the container clusters existing in the system. It can be understood that acquiring the serial number information of a container cluster can be performed by way of the container cluster manager directly reading parameter information of the container cluster, which belongs to the prior art and will not be further discussed here.

At operation S2400, the serial number information is sent to the orchestrator.

It can be understood that after the container cluster manager acquires the serial number information of the container cluster, in order to facilitate the clustering of the newly created container cluster by the orchestrator, the orchestrator needs to have the serial number information of the container cluster. Therefore, the serial number information can be sent in an encrypted manner to the orchestrator through the secure channel between the container cluster manager and the orchestrator. It can be understood that the container cluster manager sending the serial number information to the orchestrator via the secure channel belongs to the prior art and will not be further discussed here.

At S3000, a temporary encrypted cloud disk is created and the security proof information as well as a security certificate of the orchestrator are written into the temporary encrypted cloud disk.

It can be understood that after the security proof information is acquired, the security proof information and the security certificate of the orchestrator that are required by the container cluster need to be stored securely to avoid loss or tampering of the proof information. With the encrypted cloud disk that comes with the microservice application environment, the security proof information as well as the security certificate of the orchestrator can be quickly and stably stored to facilitate decryption and retrieval of the proof information by the container cluster and the container cluster manager.

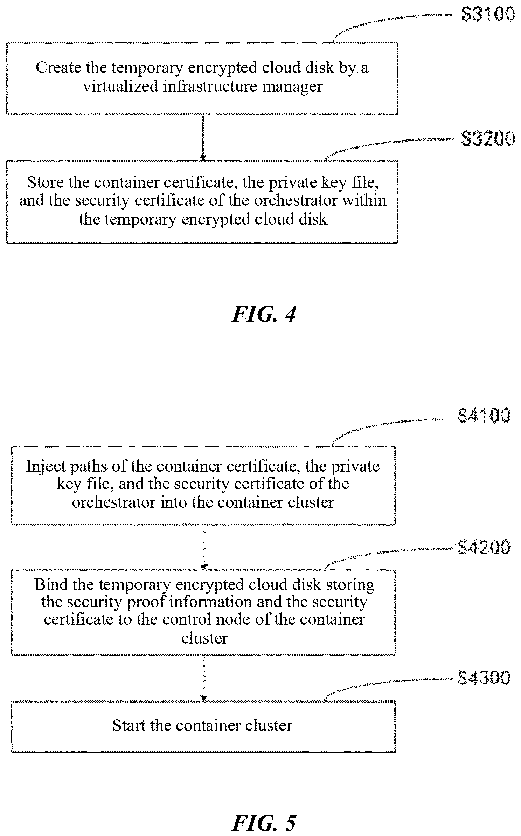

FIG. 4 illustrates a schematic diagram of the implementation of operation S3000. As shown in FIG. 4, operation S3000 includes at least the following steps.

At operation S3100, the temporary encrypted cloud disk is created by a virtualized infrastructure manager (VIM).

It can be understood that the VIM is primarily responsible for the management, monitoring, and fault reporting of hardware and virtualized resources on the infrastructure layer, and providing a pool of virtualized resources towards the virtualized network function manager (VNFM) on the upper layer. The VIM interacts with the hardware resources through the C1 interface, achieves Virtual Local Area Network (VLAN) and Virtual eXtensible Local Area Network (VXLAN) division, and manages and monitors the status of hardware resources including IP storage area networks (IP-SANs), switches, routers, firewalls, load balancers, frame fans, power supplies, and physical servers used by the managed cloud-enabled system. Therefore, the container cluster manager can apply to the VIM to create a temporary encrypted cloud disk.

It can be understood that in the deployment environment for microservice applications, when the business needs to encrypt and protect the data stored on the cloud disk because of security needs or regulatory compliance requirements, etc., one can use the cloud disk encryption function in the container cluster to protect the privacy and autonomy of data in a temporary encrypted cloud disk without the need to construct, maintain, and protect his or her own key management infrastructure. In order to save the security proof information as well as the security certificate of the orchestrator, a temporary encrypted cloud disk can be created for encrypted storage to ensure the security of the information. In an implementation, the container cluster manager can create other types of storage space through other components, such as third-party components, to save the security proof information as well as the security certificate of the orchestrator, which is not limited herein. It can be understood that the container cluster manager applying to the VIM to create a temporary encrypted cloud disk to save information belongs to the prior art and will not be further discussed here.

At operation S3200, the container certificate, the private key file, and the security certificate of the orchestrator are stored within the temporary encrypted cloud disk.

It can be understood that after the temporary encrypted cloud disk is created, the container certificate, the private key file, and the security certificate of the orchestrator can be written into the temporary encrypted cloud disk by the container cluster manager. Thus, the container cluster manager is allowed to extract the relevant encrypted information from the temporary encrypted cloud disk quickly and accurately and also ensures the security of the container certificate, the private key file, and the security certificate of the orchestrator. Thereby, the malicious modification and deletion of the information can be avoided.

At S4000, the temporary encrypted cloud disk is bound to a control node of the container cluster and the container cluster is started.

It can be understood that in the deployment environment for microservice applications, when the container cluster manager applies to the VIM for resources of the container cluster, a temporary encrypted cloud disk storing the container certificate, the private key file, and the security certificate of the orchestrator is bound to a control node of the container cluster. In some implementations, the paths of the container certificate, the private key file, and the security certificate of the orchestrator in the temporary encrypted cloud disk are input into the control node of the container cluster. Thus, the container cluster is allowed to quickly and accurately acquire corresponding security proof information prior to startup.

FIG. 5 illustrates a schematic diagram of the implementation of operation S4000. As shown in FIG. 5, operation S4000 includes at least the following steps.

At operation S4100, paths of the container certificate, the private key file, and the security certificate of the orchestrator are input into the container cluster.

It can be understood that in order to quickly acquire the container certificate, the private key file, and the security certificate of the orchestrator, the path positions of the above certificates in the temporary encrypted cloud disk need to be written to the container cluster, and the container cluster can quickly and accurately acquire the relevant certificate files through the container cluster manager and the VIM, which not only avoids the waste of occupied resources caused by storing certificate files in the container cluster, but also ensures the stability and security of the certificate files.

At operation S4200, the temporary encrypted cloud disk storing the security proof information, and the security certificate is bound to the control node of the container cluster.

It can be understood that binding the temporary encrypted cloud disk to the control node of the container cluster enables the container cluster to quickly acquire the certificate files stored within the temporary encrypted cloud disk bound thereto according to the business requirements, and avoids the occurrence of a situation in which the container cluster cannot read the certificate files, which affects the establishment of a secure channel between the container cluster and the container cluster manager.

At operation S4300, the container cluster is started.

It can be understood that after determining that the container cluster to be started is bound with a temporary encrypted cloud disk storing the security proof information and the security certificate, the container cluster is started via the container cluster manager. As the container cluster manager reacts to constantly changing operating environments and reschedules tasks when they fail to run, the efficiency is improved by adding new container clusters. In some implementations, when starting a container cluster, it is to be avoided to fix a container cluster on the same server to satisfy the need for the container cluster manager to distribute a series of tasks across hosts or in a certain order as a way to reduce the likelihood of failures while the container cluster is running.

At operation S5000, a secure channel is established between the container cluster manager and the container cluster according to the security proof information and the security certificate.

It can be understood that in the case where the container cluster is bound with a temporary encrypted cloud disk storing the container certificate of the container cluster manager and the private key file, a secure channel between the container cluster and the container cluster manager can be established through the authentication of the CA certificate. As can be seen from the above operations, the container cluster is bound with a temporary encrypted cloud disk storing the security proof information and the security certificate before startup, so the container cluster can dynamically find out the CA certificate that is consistent with that of the container cluster manager according to the paths of the container certificate, the private key file, and the security certificate of the orchestrator and carry out the authentication and the encrypted transmission of the information, so as to establish a secure channel between the container cluster manager and the container cluster.

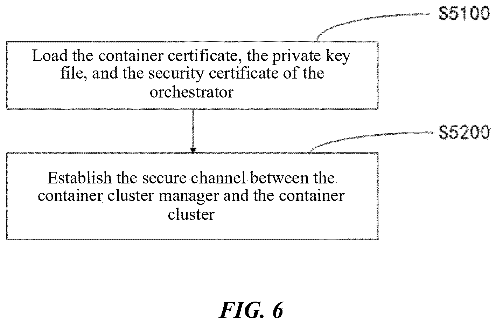

FIG. 6 illustrates a schematic diagram of the implementation of operation S5000. As shown in FIG. 6, step operation includes at least the following steps.

At operation S5100, the container certificate, the private key file, and the security certificate of the orchestrator are loaded.

It can be understood that in the deployment environment for microservice applications, when the control node of the container cluster is started, it loads the corresponding certificate files based on the paths of the container certificate, the private key file, and the security certificate of the orchestrator to facilitate the establishment of an encrypted communication channel between the container cluster and the container cluster manager. Here, the loading and the authentication of CA certificates in different application scenarios belongs to the prior art and will not be further discussed here.

At S5200, the secure channel between the container cluster manager and the container cluster is established.

It can be understood that, as can be seen from the above operation S1000, by means of the CA certificate of the container cluster manager itself, and the container certificate and the private key file in the container cluster that are consistent with those of the container cluster manager, when information is encrypted using the public key and transmitted between the container cluster manager and the container cluster through the network, the receiving unit must use the corresponding private key in order to decrypt and use it, and then a secure channel is established in a process consistent with the establishment of a secure channel between the orchestrator and the container cluster manager as described above, which will not be repeated here.

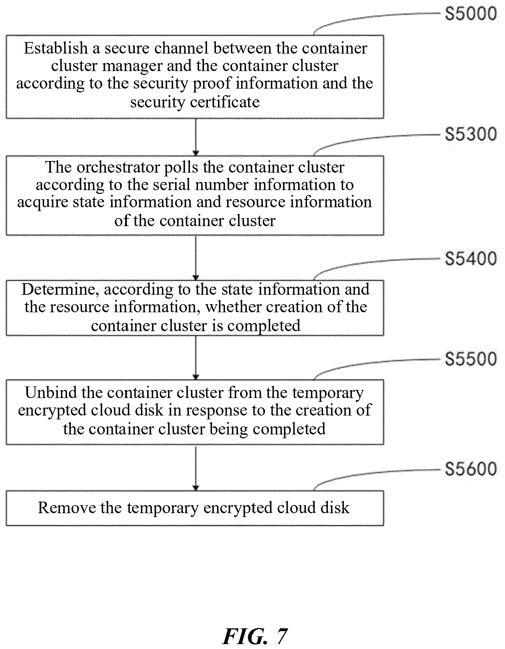

FIG. 7 illustrates a schematic diagram of the implementation of operation S5000. As shown in FIG. 7, operation S5000 further includes at least the following operations.

At operation S5300, the orchestrator polls the container cluster according to the serial number information to acquire state information and resource information of the container cluster.

It can be understood that with the unique identification serial number information of the container cluster, the orchestrator can quickly poll the container cluster to acquire the state information and the resource information of the container cluster, which facilitates the orchestrator in determining whether the container cluster is functioning properly after the creation is completed. In some embodiments, the state information and the resource information of the container cluster include, but are not limited to, a resource occupancy rate of the container cluster, a connection state between the container cluster and the container cluster manager, a connection state between the container cluster and another container cluster, and the like.

At S5400, it is determined, according to the state information and the resource information, whether creation of the container cluster is completed.

It can be understood that by reading the state information and the resource information of the container cluster and comparing them with preset thresholds, it is determined whether the creation of the container cluster is completed or not. In some implementations, when the current resource occupancy rate of the container cluster is within a threshold value, such as 30%, and the current connection states between the container cluster and the container cluster manager and between the container cluster and another container cluster are stable, it can be determined that the creation of the container cluster is completed, and a secure channel is established between the container cluster and the container cluster manager.

At S5500, the container cluster is unbound from the temporary encrypted cloud disk in response to the completion of the creation of the container cluster.

It can be understood that in the case where the creation of the container cluster is completed, a secure channel is established between the container cluster and the container cluster manager, and the container cluster is running normally, so the state information and the resource information of the current container cluster after it is created satisfy the operating conditions of the microservice application. In this case, the container cluster no longer needs to acquire the container certificate and the private key file through the temporary encrypted cloud disk, and unbinding the container cluster from the temporary encrypted cloud disk can release the temporary encrypted cloud disk occupied by the container cluster and also effectively reduce the resource occupancy rate of the container cluster, thus improving the operation efficiency of the microservice application.

At S5600, the temporary encrypted cloud disk is removed.

It can be understood that, as can be seen from the above operation S5200, a secure channel is established between the container cluster manager and the container cluster after transferring the container certificate and the private key file by way of using an encrypted cloud disk. In this case, the container cluster no longer needs the temporary encrypted cloud disk to point to the paths of the container certificate, the private key file, and the security certificate of the orchestrator. Thus, the removal of the temporary encrypted cloud disk can avoid new resource consumption and improve the operating efficiency of the microservice application.

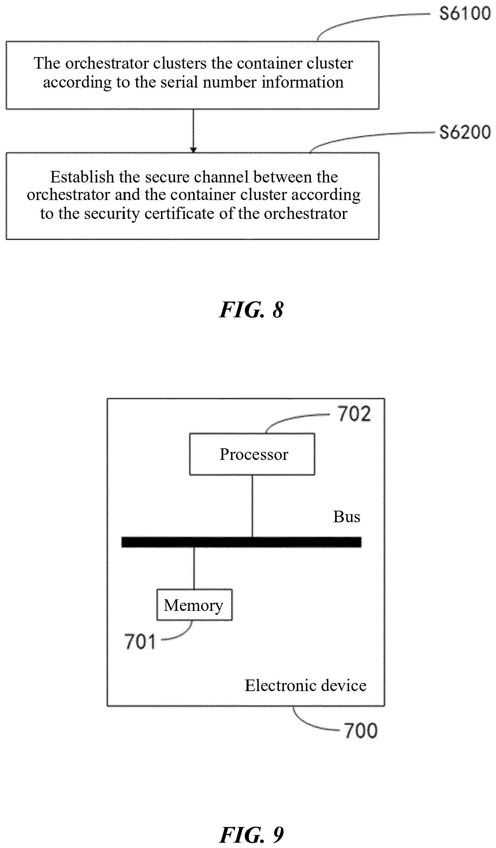

FIG. 8 illustrates a schematic diagram of the implementation of operation S6000. As shown in FIG. 8, operation S6000 includes at least the following operations.

At operation S6100, the orchestrator clusters the container cluster according to the serial number information.

It can be understood that consistent with the above operation S5300, the orchestrator traverses and clusters the container cluster based on the serial number information. It can be understood that, as the user may need to manage a plurality of container clusters, in order to facilitate the management of the container clusters by the orchestrator, the container clusters can generally be clustered and handled using a cluster-server. In some implementations, with the cluster-server, it is convenient to monitor the operational states of the plurality of container clusters, or to create containers in the container clusters, or to perform shutdown, restart, hang, and other processing on the container clusters. The connection relationship between the orchestrator and the container clusters is established by clustering the container clusters.

It can be understood that the orchestrator realizes automatic clustering of container clusters using the uniform resource locators (URLs) of the container clusters, usernames, user passwords, as well as container certificates of the container clusters, thus avoiding human intervention of the orchestrator in the management and control of the container clusters. Similarly, the orchestrator performing clustering operations on container clusters via a cluster-server belongs to the prior art and will not be further discussed here.

At operation S6200, the secure channel between the orchestrator and the container cluster is established according to the security certificate of the orchestrator.

It can be understood that since the security certificate of the orchestrator is consistent with the container certificate of the container cluster, a secure channel between the orchestrator and the container cluster can be automatically established in a process consistent with the above operation S1000, which will not be further discussed here.

It can be understood that by establishing secure channels between the orchestrator, the container cluster manager, and the container cluster, data transmission and information interaction can both be realized through the secure channels, which not only ensures the security of communications among the orchestrator, the container cluster manager, and the container cluster, but also effectively improves the automation of container cluster management and reduces human intervention, thereby improving the level of automation in the deployment of microservice applications.

FIG. 9 illustrates an electronic device 700 according to an embodiment of the present disclosure. The electronic device 700 includes, without limitations:
- a memory 701 configured to store a program; and
- a processor 702 configured to execute the program stored in the memory 701, where when the processor 702 executes the program stored in the memory 701, the processor 702 is configured to perform the secure channel establishment method described above.

The processor 702 and the memory 701 may be connected by a bus or by other means.

As a non-transitory computer-readable storage medium, the memory 701 may be configured to store a non-transitory software program and a non-transitory computer-executable program, for example, the secure channel establishment method described in any of the embodiments of the present disclosure. The processor 702 implements the above secure channel establishment method by running the non-transitory software program and instructions stored in the memory 701.

The memory 701 may include a program storage area and a data storage area, where the program storage area can store an operating system and application program(s) required by at least one feature, and the data storage area can store and perform the secure channel establishment method described above. In addition, the memory 701 may include a high-speed random access memory and a non-transitory memory, for example, at least one magnetic disk storage device, a flash memory device, or another non-transitory solid-state storage device. In some implementations, the memory 701 includes memories remotely located with respect to the processor 702, and these remote memories may be connected to the processor 702 via a network. Examples of the above-mentioned network include, but are not limited to, the Internet, an intranet, a local area network, a mobile communication network, and a combination thereof.

The non-transitory software program and the instructions required to implement the secure channel establishment method described above are stored in the memory 701, and when executed by at least one processor 702, cause the at least one processor to perform the secure channel establishment method according to any of the embodiments of the present disclosure.

An embodiment of the present disclosure provides a storage medium storing computer-executable instructions for performing the secure channel establishment method described above.

In an embodiment, the storage medium stores computer-executable instructions which, when executed by at least one control processor 702, for example, by one of the processors 702 in the electronic device 700 described above, cause the at least one processor 702 described above to perform the secure channel establishment method provided in any of the embodiments of the present disclosure.

According to an embodiment of the present disclosure, a method for secure channel establishment provided. The method includes: acquiring request information for creating a container cluster; verifying the request information and generating security proof information for the container cluster, by the container cluster manager; creating a temporary encrypted cloud disk and writing the security proof information as along with a security certificate of the orchestrator into the temporary encrypted cloud disk; binding the temporary encrypted cloud disk to a control node of the container cluster and starting the container cluster; establishing a first secure channel between the container cluster manager and the container cluster according to the security proof information and the security certificate; and clustering the container cluster by the orchestrator, and establishing a second secure channel between the orchestrator and the container cluster. According to the embodiments of the present disclosure, it is possible to establish secure channels between the container cluster manager and the container cluster and between the orchestrator and the container cluster when the container cluster is created. Thus, the automation of container cluster management is enhanced, and human intervention is reduced. Thereby, the security of communications among the orchestrator, the container cluster manager, and the container cluster is guaranteed.

The embodiments described above are only for illustration. The units described as separate components may or may not be physically separated, that is, they may be located at one place or distributed to multiple network units. Some or all of the modules can be selected according to actual needs to achieve the purpose of the scheme of this embodiment.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information delivery media.

## Claims

1. A method for secure channel establishment, which is applied to a network element comprising an orchestrator, a container cluster manager, and a container cluster, the method comprising:
acquiring request information for creating the container cluster;
verifying the request information and generating security proof information for the container cluster, by the container cluster manager;
creating a temporary encrypted cloud disk and writing the security proof information along with a security certificate of the orchestrator into the temporary encrypted cloud disk;
binding the temporary encrypted cloud disk to a control node of the container cluster and starting the container cluster;
establishing a first secure channel between the container cluster manager and the container cluster according to the security proof information and the security certificate; and
clustering the container cluster by the orchestrator, and establishing a second secure channel between the orchestrator and the container cluster.

2. The method of claim 1, wherein acquiring the request information for creating the container cluster comprises:
acquiring, by the orchestrator, the request information from a user for creating the container cluster; and
initiating, according to the request information, a request for creating the container cluster to the container cluster manager.

3. The method of claim 2, wherein verifying the request information and generating the security proof information for the container cluster, by the container cluster manager comprises:
verifying a validity of the request information by the container cluster manager, wherein the request information comprises a cluster name, a cluster attribute, a username, and a user password; and
generating the security proof information for the container cluster by the container cluster manager according to the request information, wherein the security proof information comprises a container certificate and a private key file.

4. The method of claim 3, wherein creating the temporary encrypted cloud disk and writing the security proof information as well as the security certificate of the orchestrator into the temporary encrypted cloud disk comprises:
creating the temporary encrypted cloud disk by means of a virtualized infrastructure manager; and
storing the container certificate, the private key file, and the security certificate of the orchestrator within the temporary encrypted cloud disk.

5. The method of claim 3, wherein binding the temporary encrypted cloud disk to the control node of the container cluster and starting the container cluster comprises:
inputting paths of the container certificate, the private key file, and the security certificate of the orchestrator into the container cluster;
binding the temporary encrypted cloud disk storing the security proof information and the security certificate to the control node of the container cluster; and
starting the container cluster.

6. The method of claim 3, wherein establishing the first secure channel between the container cluster manager and the container cluster according to the security proof information and the security certificate comprises:
loading the container certificate, the private key file, and the security certificate of the orchestrator; and
establishing the first secure channel between the container cluster manager and the container cluster.

7. The method of claim 1, wherein verifying the request information and generating the security proof information, by the container cluster manager further comprises:
acquiring serial number information of the container cluster; and
sending the serial number information to the orchestrator.

8. The method of claim 7, wherein before clustering the container cluster by the orchestrator and establishing the second secure channel between the orchestrator and the container cluster, the method further comprises:
polling, by the orchestrator, the container cluster according to the serial number information to acquire state information and resource information of the container cluster; and
determining, according to the state information and the resource information, whether creation of the container cluster is completed.

9. The method of claim 8, wherein after determining, according to the state information and the resource information, whether the creation of the container cluster is completed, the method further comprises:
unbinding the container cluster from the temporary encrypted cloud disk in response to a completion of the creation of the container cluster; and
removing the temporary encrypted cloud disk.

10. The method of claim 7, wherein clustering the container cluster by the orchestrator, and establishing the second secure channel between the orchestrator and the container cluster comprises:
clustering the container cluster by the orchestrator according to the serial number information; and
establishing the second secure channel between the orchestrator and the container cluster according to the security certificate of the orchestrator.

11. An electronic device, comprising: a memory, a processor, and a computer program stored in the memory and executable by the processor which, when executed by the processor, causes the processor to carry out the method of any one of claims 1 to 10.

12. A computer-readable storage medium storing a computer program which, when executed by a processor, causes the processor to carry out the method of any one of claims 1 to 10.
